(19) 
Europäisches Patentamt
European Patent Office
Office européen des brevets

(11) **EP 4 238 644 A2**

(12) **EUROPÄISCHE PATENTANMELDUNG**

(43) Veröffentlichungstag:
06.09.2023 Patentblatt 2023/36

(21) Anmeldenummer: 23157737.0

(22) Anmeldetag: **21.02.2023**

(51) Internationale Patentklassifikation (IPC):
**B01J 20/20** (2006.01)   **B01J 20/32** (2006.01)
**B01J 20/28** (2006.01)   **B01J 20/30** (2006.01)
**B01D 53/02** (2006.01)

(52) Gemeinsame Patentklassifikation (CPC):
**B01J 20/20; B01D 53/02; B01J 20/28004;
B01J 20/3021; B01J 20/3204; B01J 20/3234;
B01J 20/3236**

(84) Benannte Vertragsstaaten:
**AL AT BE BG CH CY CZ DE DK EE ES FI FR GB
GR HR HU IE IS IT LI LT LU LV MC ME MK MT NL
NO PL PT RO RS SE SI SK SM TR**
Benannte Erstreckungsstaaten:
**BA**
Benannte Validierungsstaaten:
**KH MA MD TN**

(30) Priorität: **01.03.2022 DE 102022104829**

(71) Anmelder:
• **Rheinbraun Brennstoff GmbH
50935 Köln (DE)**
• **PAN Applied Chemistry GmbH
50170 Kerpen-Sindorf (DE)**

(72) Erfinder:
• **Wirling, Jürgen
45141 Essen (DE)**
• **Fritzsche, Jürgen
45141 Essen (DE)**
• **Fülöp, Gabor
45141 Essen (DE)**
• **Munoz Buchwald, Daniel Ernesto
45141 Essen (DE)**
• **Ringenberg, Felix Christoph
45141 Essen (DE)**

(74) Vertreter: **Schwenderling, Jens
KEENWAY Patentanwälte Neumann Heine
Taruttis
PartG mbB
Postfach 103363
40024 Düsseldorf (DE)**

(54) **MITTEL ZUR ENTFERNUNG VON SCHWERMETALLEN UND SCHWERMETALL-VERBINDUNGEN AUS GASEN, VERFAHREN ZU DESSEN HERSTELLUNG UND DESSEN VERWENDUNG**

(57) Beschrieben wird ein Mittel zur Entfernung von Schwermetallen und Schwermetall-Verbindungen aus Gasen, das ein kohlenstoffhaltiges Adsorbens und Schwefelverbindungen in einer Menge von 0,25 Gew.-% bis 11,25 Gew.-%, bezogen auf das Mittel, umfasst, wobei die Schwefelverbindungen Polysulfide, Polysulfanmonosulfonate, Polysulfandisulfonate (Polythionate) und Dithionit aufweisen. Ferner wird ein Verfahren zur Herstellung des Mittels und die Verwendung des Mittels zur Entfernung von Schwermetallen und Schwermetall-Verbindungen aus Gasen beschrieben.

EP 4 238 644 A2

**Beschreibung**

Die Erfindung betrifft ein Mittel zur Entfernung von Schwermetallen und SchwermetallVerbindungen aus Gasen, ein Verfahren zu dessen Herstellung und dessen Verwendung.

Aus Rauchgasen müssen u.a. die Schwermetalle Cd, Tl, Hg, Sb, As, Pb, Cr, Co, Cu, Mn, Ni, V, Zn und Sn sowie ggf. -Schwermetall-Verbindungen entfernt werden, um Immisionsgrenzen einzuhalten. Die Rauchgase können aus Verbrennungsanlagen für Abfall, Klärschlamm, Sonderabfall, fossilen Brennstoffen sowie thermischen, metallurgischen Herstellungsprozessen, wie Zement-, Kalk-, Kupfer-/Blei-/Zink-Prozessen, die kontinuierlich Quecksilber mit sich führen können, stammen

Dies soll am Beispiel der Quecksilberentfernung näher veranschaulicht werden. Rauchgase von Verbrennungsanlagen für Abfall, Klärschlamm und Sonderabfall führen kontinuierlich Quecksilber mit. Durch Eindüsen von unbehandelter Aktivkohle in den Abgasstrom können die Hg-Emissionen deutlich reduziert werden. Die gesetzlichen Grenzwerte werden aber immer wieder herabgesetzt, so dass auch Produkte und Technologien zur Hg-Minderung weiter entwickelt bzw. optimiert werden müssen. Der Einsatz von Aktivkohle stößt anlagentechnisch an seine Grenzen. Zudem werden aktuell eine Vielzahl von neuen Anlagen zur Klärschlammverbrennung geplant bzw. bereits gebaut, die metallisches Quecksilber im Rauchgas haben werden. Zu dessen Abscheidung wird ein verbessertes Mittel zur Quecksilberentfernung benötigt, da die Adsorptionsleistung von unbehandelter Aktivkohle für metallisches Quecksilber zu gering ist.

Für die spezielle Anforderung der Entfernung metallischen Quecksilbers wird bereits Aktivkohle mit einem Polysulfid imprägniert und zur Hg-Entfernung eingesetzt. Ein wesentlicher Nachteil dieses Produktes ist neben dem hohen Preis der geringe Schwefelgehalt bei gleichzeitig hohem Wassergehalt des Imprägniermittels. Dieser geringe Schwefelgehalt in Verbindung mit dem hohen Wassergehalt führt bei der Aktivkohle zu einer eingeschränkten Belegungsrate durch Reduzierung der BET-Oberfläche.

Der vorliegenden Erfindung liegt demgegenüber die Aufgabe zugrunde, ein Mittel zur Entfernung von Schwermetallen sowie von Schwermetall-Verbindungen aus Gasen, ein Verfahren zu dessen Herstellung und dessen Verwendung bereitzustellen, die nicht die vorstehenden aus dem Stand der Technik bekannten Nachteile aufweisen.

Erfindungsgemäß wird dies durch ein Mittel zur Entfernung von Schwermetallen und Schwermetall-Verbindung nach Anspruch 1, ein Verfahren zu dessen Herstellung nach Anspruch 7 und die Verwendung des Mittels nach Anspruch 16 gelöst. Weitere Ausführungsformen sind in den abhängigen Ansprüchen angegeben.

Erfindungsgemäß wird ein Mittel zur Entfernung von Schwermetallen und Schwermetall-Verbindungen aus Gasen bereitgestellt, das ein kohlenstoffhaltiges Adsorbens und Schwefelverbindungen in einer Menge von 0,25 Gew.-% bis 11,25 Gew.-%, bezogen auf das Mittel, umfasst, wobei die genannten Schwefelverbindungen Polysulfide, Polysulfanmonosulfonate, Polysulfandisulfonate (Polythionate) und Dithionit aufweisen. Es können dabei im erfindungsgemäßen Mittel jede der genannten Schwefelverbindungen (Polysulfide. Polysulfanmonosulfonate, Polysulfandisulfonate und Dithionit) enthalten sein.

Beispiele der Schwermetalle sind Cd, Tl, Hg, Sb, As, Pb, Cr, Co, Cu, Mn, Ni, V, Zn, und Sn, insbesondere Quecksilber. Beispiele der Schwermetallverbindungen sind die Verbindungen dieser Schwermetalle, insbesondere Quecksilber(I)- und Quecksilber(II)-Verbindungen, wie $HgCl_2$.

Der Begriff "Entfernung von Schwermetallen sowie deren Verbindungen" im Sinne der vorliegenden Erfindung bedeutet, dass die Menge an Schwermetallen oder Schwermetall-Verbindungen nach der Behandlung mit dem erfindungsgemäßen Mittel geringer ist als vorher. Es wird ausdrücklich darauf hingewiesen, dass der Begriff der Entfernung von metallischem Schwermetallen sowie Schwermetall-Verbindungen bedeutet, dass das erfindungsgemäße Mittel dazu geeignet ist, sowohl Schwermetalle alleine als auch Schwermetall-Verbindungen alleine aus Gasen zu entfernen. Aber es ist auch möglich, dass diese zusammen aus einem Gas entfernt werden können. Dies bedeutet also, dass das erfindungsgemäße Mittel sowohl einzelne Schwermetalle also auch mehrere der genannten Schwermetalle sowie einzelne als auch mehrere der Schwermetall-Verbindungen als auch Mischungen dieser aus Gasen entfernen kann.

Im erfindungsgemäßen Mittel kann die Schwefelverbindung auf das kohlenstoffhaltige Adsorbens adsorbiert sein. Dies kann beispielsweise dadurch erreicht werden, dass das kohlenstoffhaltige Adsorbens mit einer Zusammensetzung imprägniert ist, die Wasser und die Schwefelverbindungen enthält. Dies ist nachfolgend im Zusammenhang mit der Herstellung des erfindungsgemäßen Mittels näher beschrieben.

Polysulfide sind Verbindungen der Formel $S_x^{2-}$, wobei x eine ganze Zahl von 2 bis 12 sein kann, insbesondere 2, 3, 4, 5, 6, 7 und 8. Polysulfanmonosulfonate haben die allgemeine Formel $S_yO_3^{2-}$, wobei y eine ganze Zahl von 2 bis 4 sein kann, insbesondere 2 und 4. Polysulfandisulfonate weisen die Formel $S_zO_6^{2-}$ auf, wobei z eine ganze Zahl von 2 bis 50, beispielsweise von 2 bis 30, wie 4, 5, 6, 18 und 29 sein kann. Dithionit ist das Oxoanion mit der Formel $S_2O_4^{2-}$.

Wenn die vorgenannten Schwefelverbindungen als Anionen vorliegen, kann das Kation ein Alkalioder ein Erdalkalikation, insbesondere Natrium, sein.

Die Mengen der Schwefelverbindungen können im erfindungsgemäßen Mittel wie folgt gewählt werden: Polysulfide 10 Gew.-% bis 30 Gew.-%, beispielsweise 15 Gew.-% bis 25 Gew.-%, wie etwa 20 Gew.%, Polysulfanmonosulfonate 15 Gew.-% bis 35 Gew.-%, beispielsweise 20 Gew.-% bis 30 Gew.-%, wie etwa 25 Gew.-%, Polysulfandisulfonate 40 Gew.-% bis 60 Gew.-%, beispielsweise 45 Gew.-% bis 55 Gew.-%, wie etwa 50 Gew.-% und Dithionit 1 Gew.-% bis 10 Gew.-%, beispielsweise 2,5 Gew.-% bis 7,5 Gew.-%, wie etwa 5 Gew.%. Diese Mengen sind auf die Schwefelverbindungen bezogen.

Die Schwefelverbindungen des erfindungsgemäßen Mittels können beispielsweise wie folgt zusammengesetzt sein:

1. Polysulfanmonosulfonat, etwa 25 Gew.-%, bezogen auf die Schwefelverbindungen, abgeleitet von $H_2S_yO_3$
mit

y=2 (Thiosulfat), insbesondere etwa 75 Gew.-%, bezogen auf die Gesamtmenge der Polysulfanmonosulfonate
y=4, insbesondere etwa 25 Gew.-%, bezogen auf die Gesamtmenge der Polysulfanmonosulfonate

2. Polysulfandisulfonate (Polythionate), etwa 50 Gew.-%, bezogen auf die Schwefelverbindungen, abgeleitet von $H_2S_zO_6$
mit

z=4, insbesondere etwa 14 Gew.-%
z=5, insbesondere etwa 38 Gew.-%
z=6, insbesondere etwa 15 Gew.-%
z=18, insbesondere etwa 23 Gew.-%
z=29, insbesondere etwa 10 Gew.-%
Summe 100 Gew.-%, bezogen auf die Polysulfandisulfonate

3. Dithionit, etwa 5 Gew.-%, bezogen auf die Schwefelverbindungen
4. Polysufide, etwa 20 Gew.-%, bezogen auf die Schwefelverbindungen, abgeleitet von $H_2S_x$
mit

x=2, insbesondere etwa 5 Gew.-%
x=3, insbesondere etwa 10 Gew.-%
x=4, insbesondere etwa 20 Gew.-%
x=5, insbesondere etwa 20 Gew.-%
x=6, insbesondere etwa 20 Gew.-%
x=7, insbesondere etwa 15 Gew.-%
x=8, insbesondere etwa 10 Gew.-%
Summe: 100 Gew.-%, bezogen auf die Polysulfide.

Der Schwefel in vorstehenden Schwefelverbindungen kann sowohl in Redoxsystemen als auch bei der Fällung mit insbesondere Quecksilber oder Quecksilber(I)- bzw. Quecksilber(II)-Verbindungen, reagieren, wobei HgS entstehen kann, eine der stabilsten Quecksilberverbindungen. HgS kann im Inneren des kohlenstoffhaltigen Adsorbens kristallisieren und agglomerieren. Thermische Untersuchungen zeigen, dass sich dieses HgS ähnlich wie reines HgS erst ab 350 °C zersetzt.

In einer Ausführungsform ist das kohlenstoffhaltige Adsorbens Braunkohlenkoks. Braunkohlenkoks wird aus heimischer Braunkohle durch Aktivierung im Herdofenverfahren hergestellt. Dabei entsteht ein hochwertiger Aktivkoks, der sich als wirtschaftliches Adsorptions- und Filtermittel in der Umwelttechnik bewährt hat. Ein solcher Braunkohlenkoks kann kommerziell unter der Marke Herdofenkoks® oder HOK® erhalten werden.

In einer anderen Ausführungsform beträgt die Korngröße des Adsorptionsmittels 0,6 mm oder weniger, insbesondere 0,1 mm oder weniger. Dies kann durch einen Mahlschritt erreicht werden. Durch die durch diesen Schritt entstehende thermische Energie wird das mit dem bei der Imprägnierung zugegebene Wasser aus dem kohlenstoffhaltigen Adsorbens freigesetzt, wodurch die Schwefelverbindungen in konzentrierter Form an dem kohlenstoffhaltigem Adsorbens gebunden werden. Somit wird eine Verminderung der BET-Oberfläche und eine Einschränkung der Belegungsrate der Aktivkohle im Vergleich zum Stand der Technik vermieden.

Im Anwendungsfall, d.h. beispielsweise bei der Entfernung des metallischen oder oxidierten Quecksilbers, werden diese zunächst vom kohlenstoffhaltigen Adsorbens adsorbiert und reagiert dann innerhalb des Porensystem mit dem vom chemische fixierten Schwefeldonator (Schwefelverbindungen) zur Verfügung gestellten Schwefel zu HgS, das im Porensystem eingelagert werden kann. Die bei der Rauchgasreinigung entstehenden Reststoffe/Abfälle können dann u.a. in Untertagedeponien endgelagert werden. Die Leistung der Quecksilberentfernung wird durch die Imprägnierung stark erhöht.

In einer weiteren Ausführungsform des erfindungsgemäßen Mittels kann es zusätzlich ein Alkali- und/oder Erdalkalihalogenid, beispielsweise $CaBr_2$, enthalten. Damit wird eine weitere Verbesserung bei der Entfernung von Quecksilber sowie Quecksilber(I)- und Quecksilber(II)-Verbindungen erreicht.

Gegenstand der vorliegenden Erfindung ist ferner eine Verfahren zur Herstellung eines Mittels zur Entfernung von Schwermetallen sowie Schwermetall-Verbindungen, insbesondere ein Mittel, wie es vorstehend beschrieben wurde, umfassend die folgenden Schritte:

(a) Aufbringen von Schwefelverbindungen in einer Menge von 0,25 Gew.-% bis 11,25 Gew.-%, bezogen auf das Mittel, wobei die Schwefelverbindungen Polysulfide, Polysulfanmonosulfonate, Polysulfandisulfonate (Polythionate) und Dithionit umfassen, auf ein kohlenstoffhaltiges Adsorbens und
(b) Mahlen des nach Schritt (a) erhaltenen Produktes.

Hinsichtlich des eingesetzten kohlenstoffhaltigen Adsorbens und der eingesetzten Schwefelverbindungen wird auf vorstehende Ausführungen verwiesen.

In einer Ausführungsform kann das Aufbringen in Schritt (a) durch Imprägnieren des kohlenstoffhaltigen Adsorbens mit einer Zusammensetzung erfolgen, die 25 Gew.-% bis 75 Gew.-%, beispielsweise 28 Gew.-% bis 36 Gew.-%, wie etwa 30 Gew.-% der vorstehenden Schwefelverbindungen, bezogen auf die Zusammensetzung, und weniger als 50 Gew.-% Wasser, bezogen auf die Zusammensetzung, enthält. Der pH-Wert dieser Zusammensetzung kann 13,0 bis 14,0 betragen. Der pH-Wert kann durch Zugabe einer Lauge eingestellt werden, z.B. ein Alkalihydroxid, wie NaOH, beispielsweise in einer Menge von 1 Gew.-% bis 5 Gew.-%, bezogen auf die Zusammensetzung. Die Schwefelmenge in dieser Zusammensetzung ist höher als die Mengen in vergleichbaren Zusammensetzungen. Ferner ist die Zusammensetzung bedingt durch einen hohen Feststoffgehalt von 52 Gew.-% bis 65 Gew.-% vergleichsweise wasserarm. Die hohe Effizienz beim Imprägnieren wird noch dadurch verstärkt, dass bei einer Eindüsung auf das kohlenstoffhaltige Adsorbens Wasser verdunstet.

Das Imprägnieren kann dadurch erfolgen, dass die Schwefelverbindungen, z.B. in vorstehend beschriebener Zusammensetzung, mit dem kohlenstoffhaltigen Adsorbens in Kontakt gebracht werden, beispielsweise für mindestens 1 Sekunde. Gegebenenfalls kann der Kontakt von Schwefelverbindungen und kohlenstoffhaltigem Adsorbens durch ein Bewegen der beiden Komponenten, beispielsweise Rühren, erfolgen. Das Wasser der für die Imprägnierung verwendeten Zusammensetzung kann nach dem in Kontakt bringen zumindest teilweise entfernt werden.

Imprägnierung ist eine durchtränkende Behandlung von festen porösen Stoffen mit gelösten, emulgierten oder dispergierten Substanzen, den Imprägniermitteln. Nach dem Verdunsten oder Trocknen des Lösungsmittels bzw. Dispersionsmediums verleihen die aufgebrachten Substanzen den behandelten Materialien veränderte Gebrauchseigenschaften. Durch die Imprägnierung wird eine besonders gleichmäßige Verteilung der Schwefelverbindungen auf der Oberfläche des kohlenstoffhaltigen Adsorbens erreicht.

In einer Ausführungsform können 99 Gew.-% bis 85 Gew.-%, beispielsweise etwa 96,5 Gew.-%, des kohlenstoffhaltigen Adsorbens mit 1 Gew.-% bis 15 Gew.-%, beispielsweise etwa 4,5 Gew.-%, der vorstehenden Zusammensetzung imprägniert werden.

Ferner kann in einer Ausführungsform des erfindungsgemäßen Verfahrens ein kohlenstoffhaltiges Adsorbens insbesondere bei der Imprägnierung eingesetzt werden, das eine Korngröße von 1 mm bis 10 mm, insbesondere 1,25 mm bis 5 mm, aufweist. Das Aufbringen der Schwefelverbindungen auf das kohlenstoffhaltige Adsorbens kann in diesem grobkörnigen Zustand stattfinden, wodurch eine prozessgebundene Trocknung erzielt werden kann. Durch den Mahlschritt (b) im erfindungsgemäßen Verfahren kann die Korngröße auf weniger als 0,6 mm, insbesondere weniger als 0,1 mm eingestellt werden. Dies kann beispielsweise durch eine Pallamühle erfolgen. Durch die durch diesen Mahlschritt entstehende thermische Energie kann das mit der Imprägnierung zugegebene Wasser aus dem kohlenstoffhaltigen Adsorbens freigesetzt werden, wodurch die Schwefelverbindungen in konzentrierter Form an dem kohlenstoffhaltigem Adsorbens gebunden werden. Somit wird eine deutliche Verminderung der BET-Oberfläche und eine Einschränkung der Belegungsrate der Aktivkohle vermieden.

Die in Verbindung mit der vorliegenden Erfindung beschriebenen Korngrößen können in üblicher Weise durch Laserbeugung oder Siebanalyse bestimmt werden.

In einer weiteren Ausführungsform kann im erfindungsgemäßen Verfahren zusätzlich ein Alkali- und/oder Erdalkalihalogenid, z.B. $CaBr_2$, auf das kohlenstoffhaltige Adsorbens aufgebracht werden. Daraus kann das Halogen durch eine Reaktion des Halogenids mit dem Disulfid- oder Dithionit-Anion gebildet werden. Bereits beim Herstellungsprozess des erfindungsgemäßen Mittels kann das Halogenid zugegeben werden. Dabei können wässrige Lösungen von Alkali- und Erdalkalihalogeniden in einem Konzentrationsbereich von 0,1 und 15 Gew.-% stufenweise der Reaktionsmischung im Bereich zwischen 25 und 95 °C zugefügt werden. Die Zugabe bereits beim o.g. Herstellungsprozess führt zu einer günstigen Verteilung des Halogenids, das nach z.B. der Imprägnierung im kohlenstoffhaltigen Adsorbens verteilt vorliegt. Die Adsorption von beispielsweise metallischem Quecksilber kann durch folgende Schritte erklärt werden, ohne an eine Theorie gebunden zu sein:

1. Oxidation von $Hg^{met}$:

$$Hg^{(met)} + S* \rightarrow HgS$$

2. Niedertemperatur-Bromoxidation durch die (kombinierte) Bereitstellung von Bromid:

$$2\,(S_2)^{2-} + 2\,Br^- \rightarrow Br_2 + (S_4)^{2-}$$

und

$$Br_2 + Hg^{met} \rightarrow 2Br^- + Hg^{ox}$$

3. Umsetzung des oxidierten Quecksilbers (aus 1. und 2.):

$$Hg^{(ox)} + S^{2-} \rightarrow HgS$$

Gegenstand der Erfindung ist ferner die Verwendung des erfindungsgemäßen Mittels zur Entfernung von Schwermetallen und Schwermetall-Verbindungen aus Gasen, insbesondere aus Verbrennungsanlagen für Abfall, Klärschlamm, Sonderabfall, fossile Brennstoffen sowie thermischen, metallurgischen Herstellungsprozessen, wie Zement-, Kalk-, Kupfer-/Blei-/Zink-Prozessen, die kontinuierlich Quecksilber mit sich führen können, stammen. Die Verwendung kann dabei in an sich bekannter Weise erfolgen, wie die bisher im Stand der Technik eingesetzten Adsorptionsmittel. Der Fachmann kennt dazu die notwendigen Materialien und Prozessschritte. Beispiele der Schwermetalle sind Cd, Tl, Hg, Sb, As, Pb, Cr, Co, Cu, Mn, Ni, V, Zn, und Sn, insbesondere Quecksilber. Beispiele der Schwermetallverbindungen sind die Verbindungen dieser Schwermetalle, insbesondere Quecksilber(I)- und Quecksilber(II)-Verbindungen, wie $HgCl_2$,

Das folgende Beispiel soll die Erfindung weiter veranschaulichen. Es wird ausdrücklich darauf hingewiesen, dass das Beispiel nicht so verstanden werden soll, dass die Erfindung darauf beschränkt ist.

Beispiel:

Im Beispiel wird die Herstellung eines erfindungsgemäßen Mittels im großtechnischen Maßstab beschrieben. Die Menge an Herdofenkoks® (HOK®) betrug 22 t. Die Korngröße lag zwischen 1,25 mm bis 5 mm. Es wurde eine flüssige Zusammensetzung mit 30 Gew.-% einer Mischung von Schwefelverbindungen zum Herdofenkoks® mittels Düsensystem zugegeben. Das Mischungsverhältnis betrug 96,5 Gew.-% Herdofen-koks® und 4,5 Gew.-% der Zusammensetzung.

Die Zusammensetzung wies folgende Schwefelverbindungen auf:

1. Polysulfanmonosulfonate, 25 Gew-%, abgeleitet von $H_2S_yO_3$

y=2 (Thiosulfat): 75 Gew.-%
y=4: 25 Gew.-%

2. Polysulfandisulfonate (Polythionate) 50 Gew.-%, abgeleitet von $H_2S_zO_6$

z=4: 14 Gew.-%

z=5: 38 Gew.-%

z=6: Gew.-15 %

z=18: Gew.-23 %

z=29: Gew.-10 %

Summe 100 Gew.-%

3. Dithionit, 5 Gew.-%

4. Polysufide, 20 Gew.-%, abgeleitet von $H_2S_x$

x=2: 5 Gew.-%

x=3: 10 Gew.-%

x=4: 20 Gew.-%

x=5: 20 Gew.-%

x=6: 20 Gew.-%

x=7: 15 Gew.-%

x=8: 10 Gew.-%

Summe: 100 Gew.-%

Danach wurde eine pneumatische Förderung zu einer geeigneten Mühle durchgeführt, in der auf eine Korngröße von weniger als 0,6 mm gemahlen wurde. Nach einer ggf. durchgeführten Zwischenlagerung kann die Verladung in einen Silo-LKW und der Transport zum Einsatzort für die Quecksilberentfernung erfolgen.

**Patentansprüche**

1. Mittel zur Entfernung von Schwermetallen und Schwermetall-Verbindungen aus Gasen, das ein kohlenstoffhaltiges Adsorbens und Schwefelverbindungen in einer Menge von 0,25 Gew.-% bis 11,25 Gew.-%, bezogen auf das Mittel, umfasst, wobei die Schwefelverbindungen Polysulfide, Polysulfanmonosulfonate, Polysulfandisulfonate und Dithionit aufweisen.

2. Mittel nach Anspruch 1, wobei die Polysulfide in einer Menge von 10 Gew.-% bis 30 Gew.-%, die Polysulfanmonosulfonate in einer Menge von 15 Gew.-% bis 35 Gew.-%, die Polysulfandisulfonate in einer Menge von 40 Gew.-% bis 60 Gew.-% und Dithionit in einer Menge von 1 Gew.-% bis 10 Gew.-%, jeweils bezogen auf die Schwefelverbindungen, vorliegen.

3. Mittel nach einem der vorhergehenden Ansprüche, wobei das kohlenstoffhaltige Adsorbens Braunkohlenkoks aufweist.

4. Mittel nach Anspruch 3, wobei der Braunkohlenkoks einen Herdofenkoks® aufweist.

5. Mittel nach einem der vorhergehenden Ansprüche, wobei dessen Korngröße weniger als 0,6 mm beträgt.

6. Mittel nach einem der vorhergehenden Ansprüche, wobei es weiterhin ein Alkali- und/oder Erdalkalihalogenid enthält.

7. Verfahren zur Herstellung eines Mittels zur Entfernung von Schwermetallen und Schwermetall-Verbindungen aus Gasen, umfassend die folgenden Schritte:

(a) Aufbringen von Schwefelverbindungen in einer Menge von 0,2 Gew.-% bis 6 Gew.-%, bezogen auf das Mittel, wobei die Schwefelverbindungen Polysulfide, Polysulfanmonosulfonate, Polysulfandisulfonate und Dithionit umfassen, auf ein kohlenstoffhaltiges Adsorbens und
(b) Mahlen des nach Schritt (a) erhaltenen Produktes.

8. Verfahren nach Anspruch 7, wobei die Polysulfide in einer Menge von 10 Gew.-% bis 30 Gew.-%, die Polysulfanmonosulfonate in einer Menge von 15 Gew.-% bis 35 Gew.-%, die Polysulfandisulfonate in einer Menge von 40 Gew.-% bis 60 Gew.-% und Dithionit in einer Menge von 1 Gew.-% bis 10 Gew.-%, jeweils bezogen auf die Schwefelverbindungen, eingesetzt werden.

9. Verfahren nach Anspruch 7 oder 8, wobei das kohlenstoffhaltige Adsorbens Braunkohlenkoks aufweist.

10. Verfahren nach Anspruch 9, wobei der Braunkohlenkoks einen Herdofenkoks® aufweist.

11. Verfahren nach einem der Ansprüche 7 bis 10, wobei das Aufbringen der Schwefelverbindungen auf das kohlenstoffhaltige Adsorbens durch Imprägnieren des kohlenstoffhaltigen Adsorbens mit einer Zusammensetzung erfolgt, die 25 Gew.-% bis 75 Gew.-% der Schwefelverbindung, bezogen auf die Zusammensetzung, und weniger als 50 Gew.-% Wasser, bezogen auf die Zusammensetzung, enthält.

12. Verfahren nach Anspruch 11, wobei 99 Gew.-% bis 85 Gew.-% des kohlenstoffhaltigen Adsorbens mit 1 Gew.-% bis 15 Gew.-% der Zusammensetzung imprägniert werden.

13. Verfahren nach einem der Ansprüche 7 bis 12, wobei das kohlenstoffhaltige Adsorbens, das in Schritt (a) eingesetzt wird, eine Korngröße von 1 mm bis 10 mm aufweist.

14. Verfahren nach einem der Ansprüche 6 bis 12, wobei die Korngröße nach dem Mahlen 0,6 mm oder weniger beträgt.

15. Verfahren nach einem der vorhergehenden Ansprüche, wobei weiterhin ein Alkali- und/oder Erdalkalihalogenid auf das kohlenstoffhaltige Adsorbens aufgebracht wird.

16. Verwendung des Mittels nach einem der Ansprüche 1 bis 6 zur Entfernung von Schwermetallen und Schwermetall-Verbindungen aus Gasen.